# EUROPEAN PATENT APPLICATION

(11) **EP 4 443 709 A1**
(43) Date of publication of application: **09.10.2024**
(21) Application number: 23166835.1
(22) Date of filing: 05.04.2023
(51) Int. Cl.: H02K 1/278, H02K 1/2791, H02K 1/27, H02K 7/18

(54) **MAGNET MODULE FOR A ROTOR OF AN ELECTRICAL MACHINE**

(71) Applicant: Siemens Gamesa Renewable Energy A/S, 7330 Brande (DK)
(72) Inventor: Azar, Ziad, Sheffield, S10 4ED (GB); Clark, Richard, Worrall, S35 0AF (GB)
(74) Representative: SGRE-Association

(57) **Abstract**

It is described a magnet module (130) for a rotor (110) of an electrical machine (100), in particular a wind turbine generator, comprising: a base member (132) extending in a width direction (103), in particular circumferential direction, in a length direction (101), in particular axial direction, and in a thickness direction (102), in particular radial direction, and having a rotor house mounting surface (133) and, at an opposite side, a magnet mounting surface (134) both extending in the width direction (102) and the length direction (101); a magnet (135) mounted at the magnet mounting surface (134) of the base member (132), wherein the base member (132) has at least one first base member recess (137) at the rotor house mounting surface (133), the first base member recess extending in the length direction (101).

## Description

### Field of invention

The present invention relates to a magnet module for a rotor of an electrical machine, relates to a rotor for an electrical machine and further relates to an electrical machine, in particular wind turbine generator.

### Art Background

For a permanent magnet generator, in particular relatively large generator, the permanent magnets mounted on the rotor are housed within a magnet module. The magnet module may be mounted to the rotor house, for example using a "T-track" retention system. Thereby, the radial and circumferential or tangential movement of the magnet module may be constrained by structural features machined for example at or into the rotor house.

However, conventionally, due to the manufacturing and assembly processes, there are dimensional tolerances and there may be a degree of "play" between the base plate of the magnet module and the retention system, thereby hampering the rigid mounting of the magnet module to the rotor house.

The following forces may act on the module:
a) Due to the permanent magnet, there may be a high radial magnet force acting on the magnet module pulling it onto the rotor house, due to the fact that the magnet air gap between rotor house and base plate is significantly smaller (< 0.2 mm when considering any coatings on the components or due to surface flatness) compared to the large main working electromagnetic air gap of the generator (typically between 3 and 8 mm) .
b) For the application of a wind turbine generator, the machine may only act in one quadrant of the power-speed plane, with only one direction of rotation and torque (and thereby reacting the force to the rotor house and producing torque).
c) In open-circuit or no-load conditions when there is no stator current and no load torque, the high circumferential net force that generates net torque may not be present and the tangential forces may oscillate about zero (but at a significantly lower magnitude) due to interaction with the salient stator structure. However, in this mode, the tangential forces are usually lower than the frictional forces resulting from the high radial force pulling the magnet into the rotor house and the surface coefficient of friction and the model may not slide within the T-track.

Further, a generator with multiple stator sections supplying parallel converters may have only selected sections of the stator active or operating under certain operating conditions such as under reduced converter operation (RCO) and the forces on the magnet module, as it transitions from active to inactive segments/sectors of the stator, may cause more complex transient module torques and forces. Those forces or torques may overcome the frictional forces and may allow the magnet module to move (slide or lift) within the retention system of the rotor house. This may conventionally lead to so-called "module rattling" which may cause nuisance noise but more importantly may also lead to issues of fatigue of the retention structure due to the module repeatedly impacting on the rotor house structure. In the past, these conventionally observed magnet module movements may have limited the operational envelope in modes where only limited sections of the stator are active.

Thus, there may be a need for a magnet module for a rotor of an electrical machine, there may be a need for a rotor for an electrical machine and there may be a need for an electrical machine, wherein some of the above-mentioned disadvantages are reduced or even overcome. Further, there may be a need for improvements of firm mounting of a magnet module to a rotor, where undesired movements and noise may be reduced or even avoided whilst having limited negative impact on the main rotor torque.

### Summary of the Invention

This need may be met by the subject matter according to the independent claims. Advantageous embodiments of the present invention are described by the dependent claims.

According to an embodiment of the present invention it is provided a magnet module for a rotor of an electrical machine, in particular a wind turbine generator, comprising: a base member extending in a width direction, in particular circumferential direction, in a length direction, in particular axial direction, and in a thickness direction, in particular radial direction, and having a rotor house contact/mounting surface and, at an opposite side, a magnet contact/mounting surface both extending in the width direction and the length direction; a magnet mounted at the magnet mounting surface of the base member, wherein the base member has at least one first base member recess at the rotor house mounting surface, the first base member recess extending in the length direction.

The magnet module may, beside the base member and the magnet, also comprise a cover which covers the magnet and which may be welded to the base member. The cover may protect the magnet from damage and/or corrosion.

The base member may substantially be configured as a rectangular plate and the magnet may also have a rectangular cross section (when viewed along the width direction or radial direction) .

The width direction, the length direction and the thickness direction may be associated or attributed to the magnet module for itself. The circumferential direction, the axial direction and the radial direction made to the respective directions when the magnet module is installed at the rotor to which a rotation axis running in the axial direction can be attributed. Further to the rotor and in particular also to the entire assembled electrical machine, a circumferential direction and a radial direction can be attributed which are both perpendicular to the axial direction in the conventional sense.

The rotor house mounting surface may be and/or the magnet mounting surface may be substantially plane, flat surfaces, in particular having rectangular shape. The respective mounting surfaces may be machined surfaces. There may or there may not be any material in between or cover on the rotor house mounting surfaces and/or the magnet mounting surface when the magnet module is mounted to the rotor and the magnet is mounted to the base member, in particular mounted to the magnet mounting surface of the base member.

An interface between the magnet and the base member may e.g. consist or comprise an adhesive layer or bondline.

Any gap between the rotor house and the rotor house mounting surface of the magnet module may be minimized or may be kept below a given threshold. The same holds for any gap between the magnet mounting surface of the magnet module and a mounting surface of the magnet.

The magnet may - for mounting - comprise a base member mounting surface which may also be substantially a flat, plane surface, in particular machined surface.

The (first) base member recess may also be referred to as base member slit or base plate slit. The first/second base member recess may substantially or primarily extend in the length direction of the magnet module, corresponding in an assembled state to the axial direction (of the rotor or the electrical machine).

The first/second base member recess may act as a magnetic flux barrier, causing flux lines to be deformed and being led around the first/second base member recess. Thereby, radial forces pulling the magnet module towards the rotor house may be increased resulting in increased stability of the magnet module when assembled or mounted to the rotor house.

The positioning along the width direction of the first/second base member recess may be determined or defined based on the particular application, in particular including performing simulations of the resulting magnetic fluxes or forces and/or torques acting on the magnet module when placed or arranged at the rotor house, in particular at the mounting areas or at a particular mounting area. The base member recess may also be considered as a base member cavity.

The base member recess may be open to the or towards the rotor house mounting surface. The recess may or may not house a non-magnetic and/or non-conductive medium, such as air or any other suitable fluid or solid material.

The introduction of the at least first base member recess (and in particular also a second base member recess) into the base member may enhance the performance of the resulting or assembled electrical machine or assembled rotor, as the retention force(s) or attractive force(s) of the mounting of the magnet module to the rotor may be improved. Further, in particular, the addition of the first and/or second base member recess may further improve the performance or the effects of any potentially present rotor house recess or slit.

The magnet module may consist of a permanent magnet bonded onto a ferromagnetic base plate which may have a thickness of for example between 3 mm and 7 mm, in particular around 5 mm.

The magnet may be covered with a metallic cover which may be located over the magnet and which may be welded to the base plate in order to fully encapsulate the magnet and for example to prevent corrosion and prevent damage. The base plate or in general the base member may typically have a machined surface or machined surfaces to better control the dimensions of "tabs" which locate within the rotor house retainment system and to ensure the base plate flatness, to minimize "parasitic" air gaps between the base plate and the rotor house in the main magnet flux path or magnetic circuit of the magnet.

According to an embodiment of the present invention, the first base member recess opens towards the rotor house mounting surface and/or wherein the magnet protrudes in the thickness or radial direction from the base member; and/or wherein the base member is configured as base plate.

When the first and/or second base member recess opens towards the rotor house mounting surface, manufacturing the first and/or second base member recess may be simplified and flux lines may be deformed to increase attractive forces.

The base member recess(es) may for example be manufactured by a milling or machining or grinding process or an EDM erosion process, for example. In other embodiments, the base member including the first and/or second base member recess may be a cast piece or may be produced by casting or for example by additive manufacturing.

According to an embodiment of the present invention, the base member has a second base member recess at the rotor house mounting surface spaced apart from the first base member recess in the width direction, the second base member recess extending in the length direction, in particular parallel to the first base member recess.

The presence of a second base member recess may further increase in particular radial forces acting on the magnet module when assembled to a rotor for increasing the fixation or attachment of the mounting. Thereby, undesired movements and/or noise due to the magnet module may be reduced. The first and/or the second base member recesses may be substantially parallel to the length direction of the magnet module or may be parallel to the axial direction of the assembled rotor or assembled electrical machine. Thereby, also the manufacturing may be simplified.

According to an embodiment of the present invention, the base member comprises at width direction ends, in particular circumferential ends, edges which extend in the length direction, the edges being provided to engage with a retention structure at a rotor house, and/or wherein the first and/or second base member recess at least partially extends parallel to the edges.

Edges may be utilized to engage with a conventionally known retention structure, in particular a rail structure. Edges may for example comprise cross-sectional shapes being complementary to one half of a "T" when the retention structure is provided with "T" shaped rails extending in the axial direction. Thereby, conventionally available rotors may be utilized for mounting the magnet module to the rotor.

According to an embodiment of the present invention, the base member recess has an axial extent or extent in the length direction of between 50% and 100% of an extent of the base member in the length direction, and/or wherein the base member recess has a circumferential extent or extent in the width direction of between 1% and 10% or 15% of an extent of the base member in the width direction, and/or wherein the base member recess has a radial extent or extent in the thickness direction of between 10% and 100%, in particular between 40% and 80%, of an extent of the base member in the thickness direction.

Thereby, great flexibility is provided and the respective dimensions or extents may be selected or determined based on the particular application. The respective dimensions may for example be derived from simulations of magnetic fluxes and/or forces and/or torques and also simulations regarding the structural stability of the components.

According to an embodiment of the present invention, the base member recess is formed by several base member recess portions being separated from each other in the length direction, the base member recess portions having equal or different shape and/or extent.

When several base member recess portions are provided which are separated from each other, the portions in between may serve to increase the mechanical rigidity or stability of the base member. Thereby, the base member may be prohibited from bending or bending may be reduced.

According to an embodiment of the present invention it is provided a rotor for an electrical machine, in particular wind turbine generator, comprising: at least one magnet module according to any one of the preceding embodiments; a rotor house having a rotation axis along an axial direction and having plural magnet module mounting areas spaced apart in the circumferential direction and extending in the axial and the circumferential direction, the rotor house having a rotor house recess at at least one of the magnet module mounting areas, wherein the magnet module is arranged at the at least one of the magnet module mounting areas having the rotor house recess.

The rotor may be an outer rotor or an inner rotor. The rotor house may have substantially a cylinder symmetry, the symmetry axis being parallel or coinciding with the axial direction. The rotor house recess may also be referred to as rotor house slit or rotor house cut-out. The rotor house recess may open towards the magnet module mounting area and may be in particular within the magnet module mounting area to which the magnet module comprising at least the first and/or a second base member recess is mounted.

The presence of the first base member recess and/or the second base member recess may advantageously deform the magnetic flux lines (around the respective recesses) potentially or advantageously causing higher radial forces pulling or pushing the magnet module towards the rotor house.

In particular, the combination of the presence of the rotor house recess with the presence of the first base member recess and/or the second base member recess may advantageously deform the magnetic flux lines (around the respective recesses) potentially or advantageously causing higher radial forces pulling or pushing the magnet module towards the rotor house. Thereby, any movements or "rattling" of the magnet module attached to the rotor house may be reduced or even avoided thereby improving performance.

The rotor house recess may be considered as a cut-out machined within the rotor house. The rotor house recess or cut-out may act in the following ways:
1) The reduction of the cross-sectional area in contact between the base member and the rotor house relative to the cross-sectional area of the magnet module may increase the flux density in the gap between the base member and the rotor house. In simple terms, due to the same flux travelling through a smaller area as the flux will prefer to travel through the small air gap between the base member and the rotor house steel and not the large gap introduced by the rotor house recess or rotor house cut-out. The radial force on this surface of the magnet module may then be increased as the force is proportional to the square of the radial flux density (Fr = (Br ² - Bt²) • A/2µ0).
2) The cut-out or the rotor house recess may also tend to create a localized high region of flux density in the corners due to flux concentration, again promoting higher forces, in defined locations. The dimensions of the rotor house recess, in particular its width and a circumferential offset from the centre of the retention track, in particular T-track, may be carefully optimized to create the required forces (without significant loss in the main rotor torque). For example, the circumferential shift may be used to produce a torque about the point, the magnet module is likely to pivot about (resulting from the engagement of the base plate tab with the rotor house T-track). This may counteract or reduce any torque from the interaction of the magnet module and the stator windings or teeth attempting to lift the magnet module.

According to an embodiment of the present invention, the rotor house comprises plural retention rails, in particular providing insertion slots, spaced apart in the circumferential direction and extending in the axial direction, wherein the magnet module mounting areas are provided between two adjacent retention rails, respectively, wherein the two edges, of the base member of the magnet module, extending in the length direction are inserted between two adjacent retention rails, wherein the retention rails have in particular T-shape.

The retention rails may substantially have a cross-sectional shape as a "T". Between each pair of two adjacent retention rails, an insertion slot may be provided into which one or more magnet modules may be inserted along the axial direction. The rotor may for example have mounted five and ten magnet modules between each of two retention rails, for example. Thereby, conventional mounting systems for mounting magnet modules may be utilized.

According to an embodiment of the present invention, the rotor house recess of the rotor house is circumferentially arranged between the first base member recess and the second base member recess of the base member and/or wherein a circumferential spacing between the first and/or the second base member recess and the rotor house recess is between 1% and 5% of the width extent of the base member.

When the rotor house recess is circumferentially arranged between the first base member recess and the second base member recess, the magnetic flux lines may advantageously be concentrated in areas between the rotor house recess and the first/second base member recess, in order to increase magnetic flux density and hence increase radial forces pulling the magnet module towards the rotor house. The exact relative positioning of the first/second base member recess and the rotor house recess may be determined from simulations.

According to an embodiment of the present invention, the rotor house recess has an axial extent corresponding to a total axial extent of plural magnet modules arranged between the two adjacent retention rails, axially behind each other or spaced apart, wherein the rotor house recess has a circumferential extent between 10% and 40% of a width extent of the base member, and/or wherein the rotor house recess has a radial extent of between 5% and 40% of a radial extent of the rotor house.

Other values are possible and may be determined based on structural and/or magnetic simulations.

According to an embodiment of the present invention, the rotor house recess has an area size of a cross section taken perpendicular to the axial direction of 5 to 20 times an area size of a cross section of the first and/or second base member recess.

Thus, the rotor house recess may be substantially larger in cross-sectional area than any of the first and/or second base member recesses. The relatively larger area of the rotor house recess may be possible due to the relatively larger extent of the rotor house wall thickness into which the rotor house recess may be provided or machined relative to the thickness of the base member of the magnet module.

According to an embodiment of the present invention, the base member recess and/or the rotor house recess has in cross section, perpendicular to the axial direction, at least in partially, a rectangular shape, in particular with sharp or rounded or radiused or filleted corners, a triangular shape, a V-shape, or a U-shape, and/or wherein the rotor house recess and/or the first and/or second base member recess is filled with air or glue or epoxy or other non-magnetic filler such as plastic or composite.

The different cross-sectional shapes may provide different effects which may relate to performance and/or stability and may be selected based on the particular application. Thereby, great flexibility is provided. The respective shape may also be selected based on the available manufacturing technologies or ease of manufacturing.

According to an embodiment of the present invention it is provided an electrical machine, in particular wind turbine generator, comprising: a stator with stator windings; a rotor according to one of the preceding embodiments, rotatably supported with respect to the stator.

The stator may for example be a segmented or a non-segmented stator. In particular, the stator may be a segmented stator comprising of plural stator segments each segment providing a segment of a circumferential ring portion, for example spanning 30°, 45°, 60°, 90°, 120° or another value. Each stator segment may be provided with an individual (multi-phase) stator winding set which may be connected to an associated converter. The machine may comprise plural converters to which the respective stator windings of the different stator segments are connected.

The electrical machine may for example also be configured to operate in a reduced converter operational mode, in which one or more of the stator windings of one or more of the stator segments are non-operational and also the connected converters are non-operational. In particular in this operational mode, embodiments of the present invention may provide significant advantages with respect to undesired rattling of magnet modules or movement of magnet modules.

According to an embodiment of the present invention, during rotating the rotor according to a rotation direction: one of the two edges extending in the axial direction being a leading edge of the base member with respect to the rotation direction, the other of the two edges extending in the axial direction being a trailing edge of the base member with respect to the rotation direction, wherein the first and/or second base member recess is at a position along the width direction or circumferential direction closer to the leading edge than to the trailing edge, where in particular a pivot point or pivot line is located, wherein the machine is in particular one of: an integer slot distributed winding permanent magnet synchronous machine, or a fractional slot concentrated winding permanent magnet synchronous machine.

Thus, the first and second base member recesses may not be provided for example in a centre region between the two edges extending in the axial direction but may be shifted or offset towards one side or one circumferential side or side in the width direction of the magnet module. During operation, conventionally, the magnet module may pivot or rotate or rattle around a pivot point or pivot line which is at the circumferential end (in particular edge) into which the magnet module is pushed due to the rotation. Pivoting or rattling about or around this pivot point may be reduced according to embodiments of the present invention.

It should be understood, that features, individually or in any combination, disclosed, explained, provided or employed for a magnet module for a rotor of an electrical machine, may also be provided, individually or in any combination, to a rotor for an electrical machine and/or to an electrical machine and/or to a manufacturing method of manufacturing a magnet module for a rotor of an electrical machine, according to embodiments of the present invention and vice versa.

According to an embodiment it is provided a method of manufacturing a magnet module for a rotor of an electrical machine, in particular a wind turbine generator, the method comprising: providing a base member extending in a width direction, in a length direction, and in a thickness direction, with a rotor house contact/mounting surface and, at an opposite side, a magnet contact/mounting surface both extending in the width direction and the length direction; mounting a magnet at the magnet mounting surface of the base member, providing at least one first base member recess at the rotor house mounting surface of the base member.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Embodiments of the present invention are now described with reference to the accompanying drawings. The invention is not restricted to the illustrated or described embodiments.
Fig. 1 schematically illustrates in a cross-sectional view a portion of an electrical machine according to an embodiment of the present invention;
Fig. 2 schematically illustrates in a three-dimensional view a base member of a magnet module according to an embodiment of the present invention;
Figs. 3 and 4 illustrate results of simulations of magnetic fluxes in a conventional electrical machine and an electrical machine according to an embodiment of the present invention;
Fig. 5 schematically illustrates geometric details of a portion of an electrical machine according to an embodiment of the present invention;
Figs. 6 and 7 schematically illustrate in three-dimensional views base plates of a magnet module according to embodiments of the present invention;
Fig. 8 schematically illustrates a cross-sectional view of a magnet module according to an embodiment of the present invention;
Fig. 9 illustrates in a cross-sectional view another example of a portion of an electrical machine according to an embodiment of the present invention; and
Figs. 10, 11, 12, 13 schematically illustrate in a cross-sectional view examples of a base member of magnet modules according to embodiments of the present invention.

### Detailed Description

The illustration in the drawings is in schematic form. It is noted that in different figures, elements similar or identical in structure and/or function are provided with the same reference signs or with reference signs, which differ only within the first digit. A description of an element not described in one embodiment may be taken from a description of this element with respect to another embodiment.

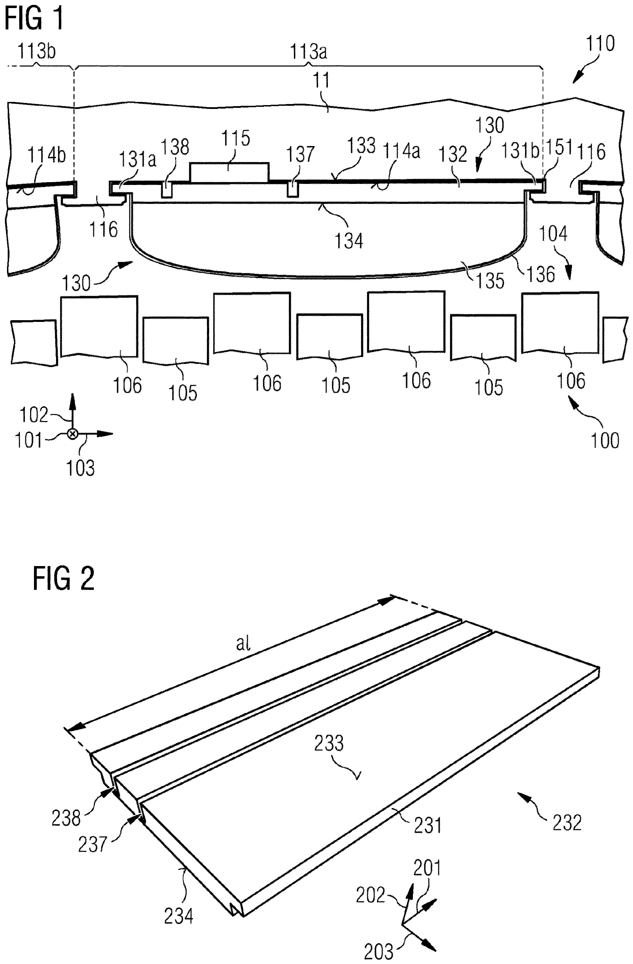

The portion of an electrical machine 100 schematically illustrated in **Fig. 1** in a cross-sectional view along an axial direction 101 (being perpendicular to a radial direction 102 and also being perpendicular to a circumferential direction 103) comprises a stator 104 with stator windings 105, as provided between teeth 106. Further, the electrical machine 100 comprises a rotor 110 according to an embodiment of the present invention.

It should be understood that features in the figures shown for a respective electrical machine or for a rotor may also apply for the magnet module individually or the rotor individually without the stator of the electrical machine.

The rotor 110 comprises at least one magnet module 130 according to an embodiment of the present invention. The rotor 110 further comprises a rotor house 111 having a rotation axis 112 (illustrated in Fig. 1 but in reality at the centre of the rotor being farther away from the rotor house 111 vertically shifted downwards). The rotation axis 112 is along the axial direction 101.

The rotor house has plural magnet module mounting areas 113a, 113b, 113c of which in Fig. 1 only one mounting area 113a is shown completely. The different magnet module mounting areas 113a, 113b, 113c are spaced apart in the circumferential direction 103 and extend in the axial direction 101 as well as in the circumferential direction 103. The respective magnet module mounting areas 113a, 113b, 113c each comprises respective mounting surfaces 114a,b,c, in particular providing contact surfaces of magnet modules to be mounted.

As can be appreciated from Fig. 1, the rotor house 111 has a rotor house recess 115 at least one of the magnet module mounting areas 113a. At the at least one of the magnet module mounting areas 113a, a magnet module 130 according to an embodiment of the present invention is arranged. Examples of embodiments of the magnet module 130 will be explained with reference to the following figures.

In the embodiment illustrated in Fig. 1, the rotor house 111 comprises plural retention rails 116 which provide insertion slots in between wherein the retention rails 116 are spaced apart in the circumferential direction 103 and extend in the axial direction 101. As can be appreciated from Fig. 1, the magnet module mounting areas 113a, 113b, 113c are provided between two adjacent retention rails 116, respectively.

Two edges 131 of a base member 132 of the magnet module 130 which extend in the length direction (parallel to the axial direction 101) are inserted between two adjacent retention rails 116. As can be appreciated from Fig. 1, the retention rails 116 have a "T"-shape.

The magnet module 130 is an example of a magnet module for a rotor of an electrical machine according to an embodiment of the present invention. The magnet module 130 comprises a base member 132 which extends in a width direction corresponding to the circumferential direction 103. The base member 132 further extends in a length direction corresponding to the axial direction 101 and in a thickness direction corresponding to the radial direction 102. The base member 132 has a rotor house mounting surface 133 and, at an opposite side, a magnet mounting surface 134, wherein both these mounting surfaces 133, 134 extend in the width direction 103 as well as in the length direction 101.

A magnet 135 is mounted at the magnet mounting surface 134 of the base member 132. The magnet 135 is covered by a protection cover 136 which is optional.

The base member 132 has at least one first base member recess 137 at the rotor house mounting surface 133. The first base member recess 137 extends primarily in the length direction corresponding to the axial direction 101. As can be appreciated from Fig. 1, the first base member recess 137 opens towards the rotor house mounting surface 133 of the base member 132.

The magnet 135 extends/protrudes in the thickness or radial direction (corresponding to the radial direction 102) from the base member 132. In the illustrated embodiment, the base member 132 is configured as a base plate.

In the embodiment of the magnet module 130 illustrated in Fig. 1, the base member 132 comprises a second base member recess 138 (which is optional) at the rotor house mounting surface 133 spaced apart from the first base member recess 137 in the width direction 103. Also the second base member recess 138 extends in the length direction 101.

Further, in the embodiment illustrated in Fig. 1, the base member 132 comprises at width direction ends, in particular circumferential ends, the edges 131 which extend in the length direction 101, wherein the edges 131 are provided to engage with retention structure 116 at the rotor house 111.

As can be appreciated also from Fig. 1, the rotor house recess 115 of the rotor house 111 is circumferentially (i.e. along the circumferential direction 103) arranged between the first base member recess 137 and the second base member recess 138 of the base member 132.

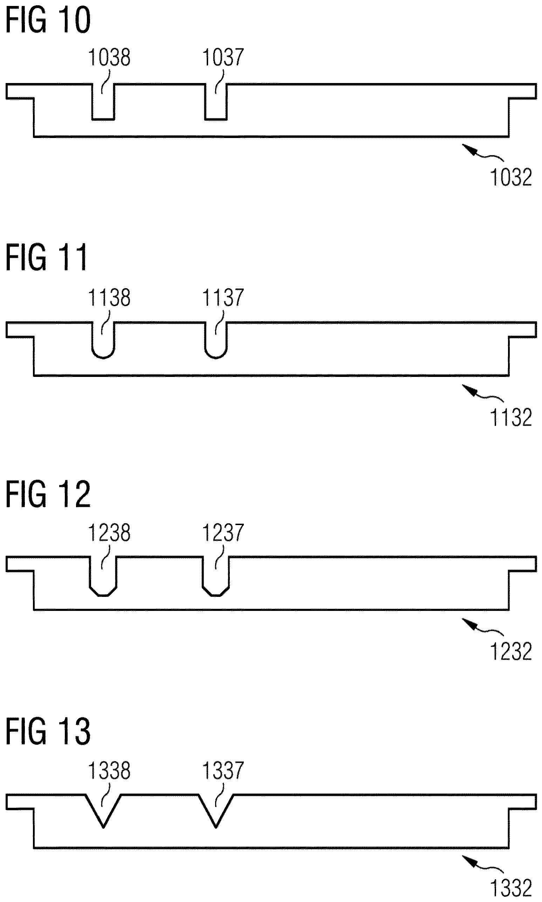

Further, the cross-sectional view of Fig. 1 also illustrates that the rotor house recess 115 has an area size of a cross section taken perpendicular to the axial direction 101 of 5 to 20 times an area size of a cross section of the first and/or the second base member recess 137, 138. In the embodiment illustrated in Fig. 1, the base member recesses 137, 138 as well as the rotor house recess 115 have a rectangular shape with relatively sharp edges. In other embodiments, other shapes may be provided, for example the shapes illustrated in Figs. 10 to 13.

**Fig. 2** illustrates in a schematic three-dimensional view a base member 232 of a magnet module according to an embodiment of the present invention, in particular viewed from above the side in contact with the rotor house. The base member 232 comprises the rotor house mounting surface 233 at which the first and the second base member recesses 237, 238 are provided. In the illustrated embodiment, the base member recesses 237, 238 extend in the full axial length 'al' of the base member 232. Thus, the respective recesses may be cut out or machined starting at the axial face of the module and travelling axially along the full length of the magnet module or full length of the base member 232 in the axial direction 201. The magnet module base member 132 illustrated in Fig. 1 may be for example configured as is illustrated in Fig. 2.

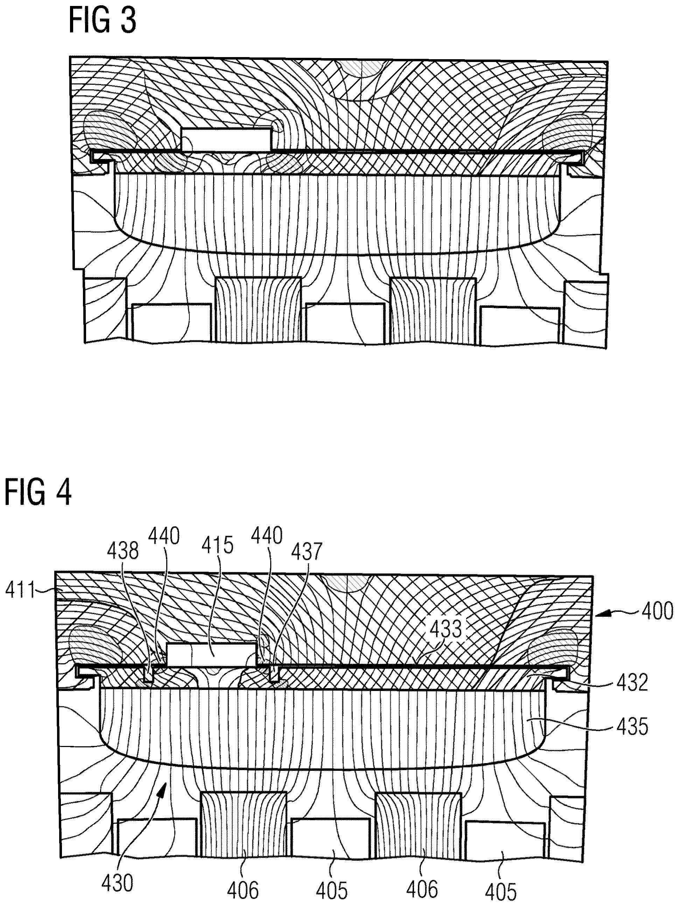

**Figs. 3 and 4** illustrate magnetic flux lines in a comparative example and an embodiment of an electrical machine according to an embodiment of the present invention, respectively. It can be appreciated from Fig. 4 that the magnetic flux as derived by simulation is locally increased at regions labelled with reference signs 440. The increased magnetic flux density results in an increased radial force pulling the respective magnet module 430 towards the rotor house 411. The increased magnetic flux densities are due to both the base member recesses 437, 438 as well as due to the rotor house recess 415.

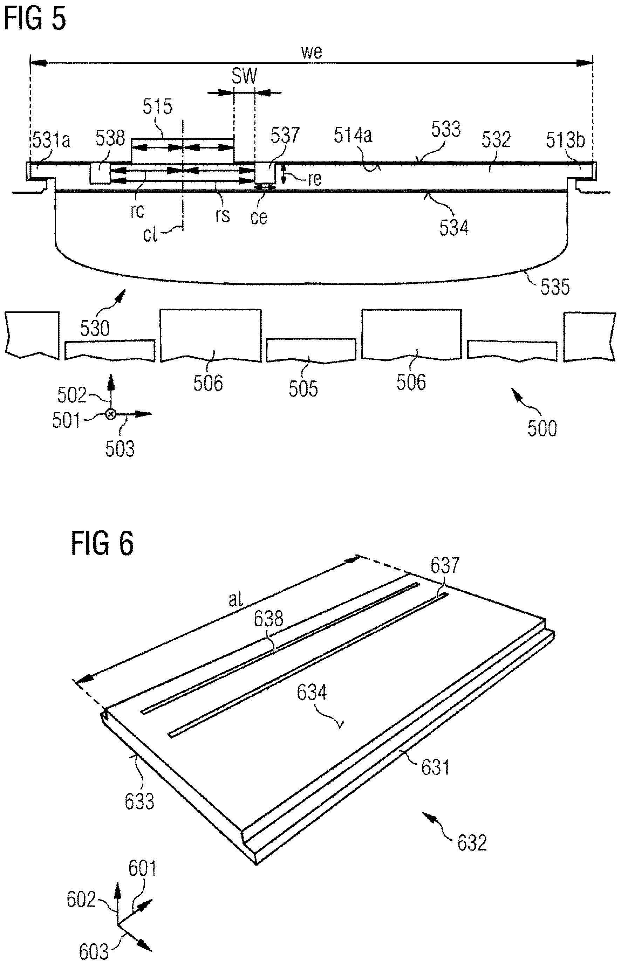

**Fig. 5** illustrates in geometrical or cross-sectional view another embodiment 500 of an electrical machine according to an embodiment of the present invention. The first base member recess 537 has an extent in the width direction or circumferential direction 503 of ce, has an extent re in the radial direction 502. The first base member recess 537 is spaced apart from the second base member recess 538 by the separation distance rs. The first and second base member recesses 537, 538 are spaced apart by the amount rc from a centre line cl of the rotor house recess 515. There is a separation width sw in the circumferential direction between the first base member recess 537 and the rotor house recess 515. The particular dimensions rc, rs, cl, ce, re, sw may be determined or selected based on the particular application, for example derived based on simulations.

**Fig. 6** illustrates a base member 632 of a magnet module according to another embodiment of the present invention. The respective magnet module may for example be utilized in a rotor and/or an electrical machine according to an embodiment of the present invention. In the embodiment illustrated in Fig. 6, the respective first base member recess 637 and the second base member recess 638 do not extend along the full axial length al of the base member 632 but are provided only in a central portion extending about between 80% and 95% of the axial length al of the base member 632. This may have the advantage of reducing the impact that the base member recess has on the base member rigidity. It potentially also may allow for a reduced thickness of the remaining "bridge" which allows for increase in magnetic saturation which improves the impact of the base member recess on the module forces. The respective base member recesses 637, 638 may either go fully through the entire base member 632 or they may only partly go through the base member 632 in the thickness direction 602 corresponding to the radial direction.

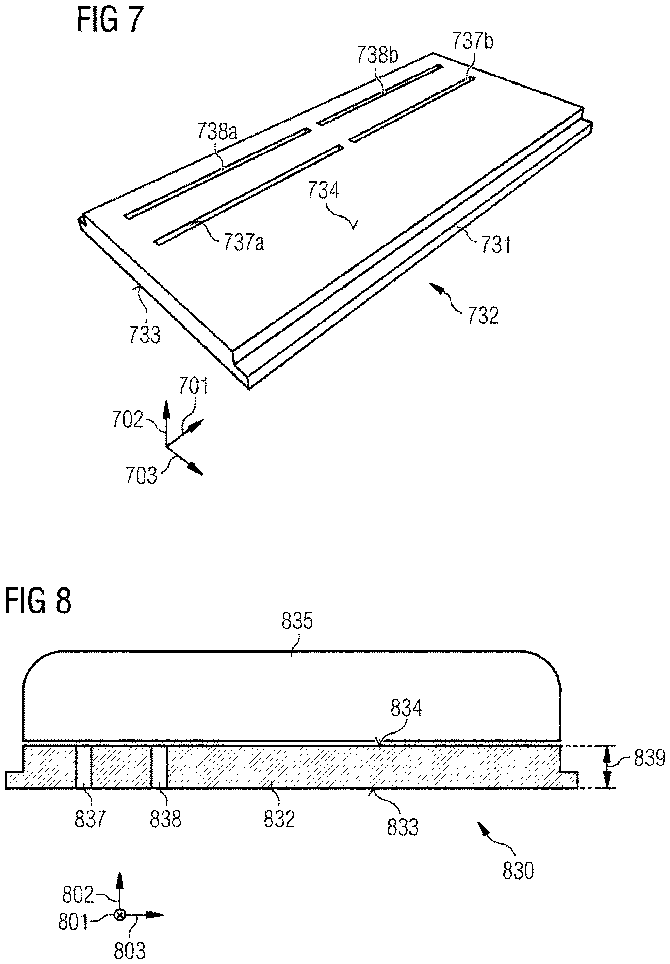

In the embodiment of a base member 732 illustrated in Fig. 7, the respective base member recesses are formed by several base member recess portions 737a, 737b and 738a, 738b which are separated from each other in the length direction 701. Thereby, further, the rigidity of the base member 732 may be improved. Also this base member 732 may be employed for any magnet module according to embodiments of the present invention.

The magnet module 830 illustrated in **Fig. 8** in a cross-sectional view according to an embodiment of the present invention also comprises a first base member recess 837 in a base member 832 and a second base member recess 838. In this embodiment, the respective recesses 837, 838 go through the full depth of the base member, i.e. have a radial extent in the radial direction 802 or width direction which is 100% of the radial extent 839 of the base member 832.

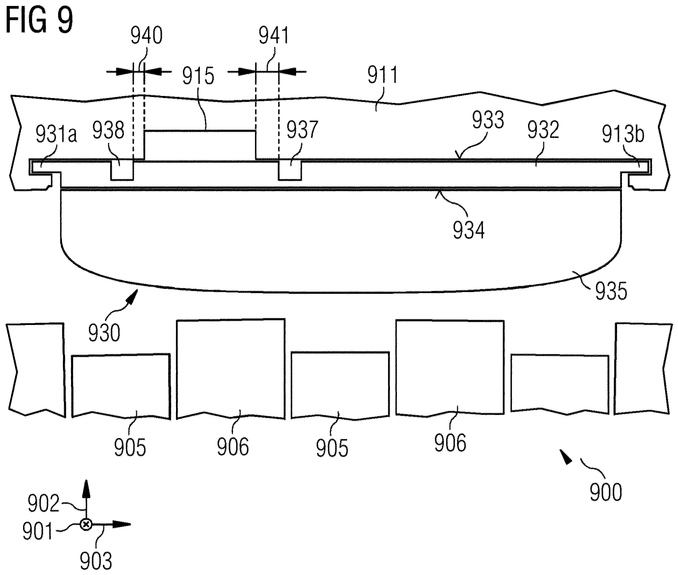

**Fig. 9** schematically illustrates in a cross-sectional view a portion of an electrical machine 900 according to an embodiment of the present invention. In the illustrated embodiment, the base member 932 of the magnet module 930 comprises a first base member recess 937 and a second base member recess 938 which have different circumferential separation 940, 941 from the rotor house recess 915. The separation relative to the rotor house recess 915 is thereby asymmetric with respect to the width direction 903 or circumferential direction. The different separations 940, 941 may for example be derived based on simulations of the flux. The different recesses in the base member 932 may have different widths and/or depths.

The **Figs. 10 to 13** illustrate embodiments of base members 1032, 1132, 1232, 1332 of magnet modules according to embodiments of the present invention for example be provided in one or more or all of the previously illustrated embodiments of a rotor or an electrical machine according to embodiments of the present invention.

In the embodiment illustrated in Fig. 10, the first as well as the second base member recesses 1037, 1038 have a rectangular shape in cross section, in Fig. 11, a rectangular shape with rounded or radiused corners. In Fig. 12, the recesses 1237, 1238 have fileted or angles internal corners and the shapes of the base member recesses 1337, 1338 illustrated in Fig. 13 have a triangular shape or V-shape.

Those different shapes of the recesses illustrated in Figs. 10 to 13 may be employed according to previously illustrated or described embodiments. Thereby, for example, mechanical strength may be improved or stress concentration may be avoided further manufacturing may be simplified.

According to embodiments of the present invention, two slits are introduced in the base plate of a magnet module, separated by a width which is greater than the rotor house recess or rotor house slit preferably located on the same central axis of the rotor house slit as illustrated in Fig. 1. Additional slits 137, 138 may act to enhance the flux concentration caused by the accompanying rotor house slit 115 and may create localized regions of higher magnetic flux as illustrated in Fig. 4. Thereby, the module radial force may be enhanced and a torque about the module pivot point 151 (see Fig. 1, where rotor rotation direction during normal operation is to the left) may be created. The slits 137, 138 in the base member 132 do not have to extent into the full depth of the base plate or base member 132 such that it maintains its structure integrity and required stiffness (for example they may be 3 mm deep within a 5 mm base plate thickness). Base plate slits may typically be 1 mm - 6 mm wide, with 3 mm depth for example. Resulting overlap (quantity sw illustrated in Fig. 5) regions/zones may be controlled by the separation of the base plate slits relative to the rotor house slit width. The overlap (sw shown in Fig. 5) may for example amount to about 6 mm. Overlap may be dimensioned such that the force is not sensitive to any circumferential movement of the base plate within the T-track which would result in an asymmetric overlap.

According to embodiments of the present invention, not two base member recesses but only one base member recess, for example recess 137 or recess 138, may be provided. Thus, a second base member recess is an optional feature according to an embodiment of the present invention. Embodiments of the present invention provide also enhancement of fatigue lifetime of a fixation glue which is utilized to fixate a magnet to a base plate or base member.

According to an embodiment of the present invention, the following advantages may be achieved:
1) A simple additional machined feature applied to the base plate that significantly improves the performance of the already proposed rotor house slit, without altering the overall proven retention system.
2) Guidance of flux and creation of localized high flux density to achieve required forces without significant reduction of the overall performance of the permanent magnet machine.
3) It is an enabling technology to allow magnets which do not have a parallel direction of magnetisation or flux focus magnets to be employed and hence allowing the benefits that can be achieved in terms of increased flux torque and energy production.
4) It is an enabling technology to allow more reliable solution for magnet pieces fixation on the base plate for concentrated winding topology (lifetime of glue).

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Magnet module (130) for a rotor (110) of an electrical machine (100), in particular a wind turbine generator, comprising:
a base member (132) extending in a width direction (103), in particular circumferential direction, in a length direction (101), in particular axial direction, and in a thickness direction (102), in particular radial direction, and having a rotor house mounting surface (133) and, at an opposite side, a magnet mounting surface (134) both extending in the width direction (102) and the length direction (101);
a magnet (135) mounted at the magnet mounting surface (134) of the base member (132),
wherein the base member (132) has at least one first base member recess (137) at the rotor house mounting surface (133), the first base member recess extending in the length direction (101).

2. Magnet module according to the preceding claim,
wherein the first base member recess (137) opens towards the rotor house mounting surface (133) and/or
wherein the magnet (135) protrudes in the width direction (102) from the base member; and/or
wherein the base member (132) is configured as base plate.

3. Magnet module according to any one of the preceding claims, wherein the base member (132) has a second base member recess (138) at the rotor house mounting surface (133) spaced apart from the first base member recess (137) in the width direction (103), the second base member recess extending in the length direction, in particular parallel to the first base member recess.

4. Magnet module according to any one of the preceding claims, wherein the base member (132) comprises at width direction ends, in particular circumferential ends, edges (131) which extent in the length direction (101), the edges (131) being provided to engage with a retention structure (116) at a rotor house (111), and/or
wherein the first and/or second base member recess (137, 138) at least partially extends parallel to the edges (131).

5. Magnet module according to any one of the preceding claims,
wherein the first and/or second base member recess (137, 138) has an axial extent or extent in the length direction of between 50% and 100% of an extent of the base member (132) in the length direction, and/or
wherein the first and/or second base member recess (137, 138) has a circumferential extent or extent in the width direction of between 1% and 15% of an extent of the base member (132) in the width direction, and/or
wherein the first and/or second base member recess (137, 138) has a radial extent or extent in the thickness direction of between 10% and 100%, in particular between 40% and 80%, of an extent of the base member (132) in the thickness direction.

6. Magnet module according to any one of the preceding claims, wherein the first and/or second base member recess (137, 138) is formed by several base member recess portions (737a,b, 738a,b) being separated from each other in the length direction, the base member recess portions having equal or different shape and/or extent.

7. Rotor (110) for an electrical machine (100), in particular wind turbine generator, comprising:
at least one magnet module (130) according to any one of the preceding claims;
a rotor house (111) having a rotation axis (112) along an axial direction (101) and having plural magnet module mounting areas (113a,b,c) spaced apart in the circumferential direction and extending in the axial and the circumferential direction, the rotor house (111) having a rotor house recess (115) at at least one (113a) of the magnet module mounting areas,
wherein the magnet module (130) is arranged at the at least one (113a) of the magnet module mounting areas having the rotor house recess (115).

8. Rotor according to the preceding claim, wherein the rotor house (111) comprises plural retention rails (116), in particular providing insertion slots, spaced apart in the circumferential direction and extending in the axial direction, wherein the magnet module mounting areas (113a,b,c) are provided between two adjacent retention rails (116), respectively,
wherein the two edges (131), of the base member of the magnet module, extending in the length direction are inserted between two adjacent retention rails (116),
wherein the retention rails have in particular T-shape.

9. Rotor according to any one of the preceding claims 7 or 8,
wherein the rotor house recess (115) of the rotor house is circumferentially arranged between the first base member recess (137) and the second base member recess (138) of the base member (132) and/or
wherein a circumferential spacing (sw) between the first and/or the second base member recess (137, 138) and the rotor house recess (115) is between 1 % and 15 % of the width extent (we) of the base member (132).

10. Rotor according to any one of the preceding claims 7 to 9,
wherein the rotor house recess (115) has an axial extent corresponding to a total axial extent of plural magnet modules arranged between the two adjacent retention rails, axially behind each other or spaced apart,
wherein the rotor house recess (115) has a circumferential extent between 10 % and 40 % of a width extent of the base member, and/or
wherein the rotor house recess (115) has a radial extent of between 5 % and 40 % of a radial extent of the rotor house.

11. Rotor according to any one of the preceding claims 7 to 10,
wherein the rotor house recess (115) has an area size of a cross section taken perpendicular to the axial direction of 5 to 20 times an area size of a cross section of the first and/or second base member recess (137, 138).

12. Rotor according to any one of the preceding claims 7 to 11,
wherein the first and/or second base member recess (137, 138) and/or the rotor house recess (115) has in cross section, perpendicular to the axial direction, at least in partially, a rectangular shape, in particular with sharp or rounded or radiused or filleted corners), a triangular shape, a V-shape, or a U-shape, and/or
wherein the rotor house recess (115) and/or the first and/or second base member recess (137, 138) is filled with air or glue, or epoxy or other non-magnetic filler such as a plastic.

13. Electrical machine (100), in particular wind turbine generator, comprising:
a stator (104) with stator windings (105);
a rotor (110) according to one of the preceding claims 7 to 12, rotatably supported with respect to the stator.

14. Electrical machine according to the preceding claim, wherein during rotating the rotor according to a rotation direction:
one of the two edges (131a,b) extending in the axial direction being a leading edge (131a) of the base member with respect to the rotation direction,
the other of the two edges extending in the axial direction being a trailing edge (131b) of the base member with respect to the rotation direction,
wherein the first and/or second base member recess is at a position along the width direction or circumferential direction closer to the leading edge (131a) than to the trailing edge (131b), where in particular a pivot point (151) or pivot line is located, wherein the machine is in particular one of:
an integer slot distributed winding permanent magnet synchronous machine, or
a fractional slot concentrated winding permanent magnet synchronous machine.

15. Method of manufacturing a magnet module (130) for a rotor (110) of an electrical machine (100), in particular a wind turbine generator, the method comprising:
providing a base member (132) extending in a width direction, in a length direction, and in a thickness direction, with a rotor house mounting surface (133) and, at an opposite side, a magnet mounting surface (134) both extending in the width direction and the length direction;
mounting a magnet (135) at the magnet mounting surface (134) of the base member,
providing at least one first base member recess (137) at the rotor house mounting surface (133) of the base member.
